Europäisches Patentamt

European Patent Office

Office européen des brevets

(11) Publication number: **0 117 692**
**B1**

# EUROPEAN PATENT SPECIFICATION

(45) Date of publication of patent specification: **12.07.89**

(51) Int. Cl.⁴: **G 01 N 27/56**

(21) Application number: **84301044.8**

(22) Date of filing: **17.02.84**

(54) Heated electrochemical cell.

(30) Priority: **18.02.83 US 467812**
**25.04.83 US 488094**

(43) Date of publication of application:
**05.09.84 Bulletin 84/36**

(45) Publication of the grant of the patent:
**12.07.89 Bulletin 89/28**

(84) Designated Contracting States:
**AT BE CH DE FR GB IT LI NL SE**

(56) References cited:
**EP-A-0 030 164**
**EP-A-0 066 851**
**EP-A-0 067 437**
**EP-A-0 108 179**
**DE-A-3 127 472**

(73) Proprietor: **DIDIER-WERKE AG**
**Lessingstrasse 16-18**
**D-6200 Wiesbaden (DE)**

(72) Inventor: **Brothers, Jack Anthony**
**3 Fox Lane West**
**Painted Post New York (US)**
Inventor: **Kane, William Theodore**
**Harris Hill Road**
**Big Flats New York (US)**
Inventor: **Brouneus, Harold Axel**
**184 Forest Drive**
**Painted Post New York (US)**
Inventor: **Layton, Margaret Mckinney**
**5832 Timber Ridge Drive**
**Raleigh North Carolina (US)**

(74) Representative: **Froud, Clive et al**
**ELKINGTON AND FIFE Beacon House**
**113 Kingsway**
**London WC2B 6PP (GB)**

Courier Press, Leamington Spa, England.

## Description

The invention relates to electrochemical cells operated at elevated temperatures and, in particular, to apparatus for heating electrochemical cells, such as those used for detecting and/or measuring the concentration of oxygen or other gaseous compounds, to an elevated temperature for proper operation.

The use of electrochemical cells with solid electrolytic elements and gas porous platinum electrodes for detecting or measuring the content of oxygen or certain other gaseous compounds in a sample gas is well known. See, for example, Patent US—A—3,928,161 to McIntyre et al. and Patent US—A—4,282,078 to Chamberland et al. Materials such as zirconia and yttriathoria are good oxygen ion conductors at elevated temperatures but are less conductive or substantially non-electronically conductive at temperatures between the elevated temperatures and room temperature. Where the electrodes of such a cell are subjected simultaneously to differing oxygen concentrations, an emf is developed across the cell between the electrodes the value of which can be determined by the Nernst equation as follows:

$$emf = \frac{RT}{4F} \ln \frac{P_1 (O_2)}{P_2 (O_2)} + C$$

where
  emf=sensor output in volts
  T=absolute temperature
  R=gas constant
  F=Faraday constant
  $P_1 (O_2)$=reference gas (oxygen) partial pressure
  $P_2 (O_2)$=sample gas (oxygen) partial pressure
  C=cell constant

Similar equations can be developed for other electrochemical systems. The cell constant C is a correction factor which reflects the inability of a particular cell to perform to theoretical limits represented by the preceding term of the equation. Cells used for oxygen concentration determination should be designed so as to exhibit consistently a known, predetermined cell constant value under all operating conditions in order that the bias in emf might be corrected or, preferably, eliminate such bias entirely (and thus the constant C).

A particularly useful application of oxygen concentration measuring apparatus is for the measurement of the oxygen content of exhaust gases from boilers, furnaces, glass furnaces, etc. in order that the combustion or smelting process may be optimally controlled. Closed loop oxygen sensing systems for combustion control in large steam plants used for power generation or industrial heating have been commercially available for at least ten years. Many of the systems available use a zirconia ($ZrO_2$) based solid electrolyte sensing cell installed in either an *in situ* or extractive mode. An *in situ* sensor is physically located within the boiler exhaust gas stream. Extractive systems are located outside the stack and require "plumbing" to carry a representative sample of the flue gas from the stack to the sensor. Currently available commercial units of both designs are typically provided with an auxiliary electric furnace to heat the sensor cell to a satisfactory operating temperature. In *in situ* sensors, the outer surface of the furnace also typically acts to protect the sensor probe from damage due to the high velocity particles in the flue gas and from dust caking which would affect the accuracy of the sensor.

The auxiliary electric furnaces used by currently available oxygen measuring systems have certain undesirable characteristics. They are an added component to the system and represent a significant fraction of its total cost. They are cumbersome to mount around the electrochemical sensor cell and require considerable design work to ensure the provision of proper heating with simultaneous sample gas exchange. They tend to be bulky and heavy, particularly when used with an *in situ* sensor which typically extends a metre or more into a flue or stack gas stream. Moreover, such furnaces consume substantial amounts of electrical power, typically between 200 to 400 watts, to maintain a sensor cell at a conventional 800°C operating temperature. Lastly, they are the least reliable component of the system and are a significant source of repair problems and cost.

Various attempts have been made to eliminate or at least reduce the size and complexity of the auxiliary furnace. For example, Patent US—A—4,098,650 to Sayles depicts an *in situ* oxygen measuring device in which the sensing cell is formed with a hollow interior into which is inserted a coil resistance wire heater. The aforesaid Patent US—A—3,928,161 to McIntyre et al. shows a different configuration for an *in situ* oxygen detector apparatus incorporating a resistance wire heater located within a tubular member supporting a disc-shaped solid electrolyte sensor cell. Patent US—A—4,334,940 to Habdas et al. depicts yet another solid electrolyte oxygen sensor in which a resistance wire heater is incorporated internally into a tubular support member containing the solid electrolyte sensor cell. While these heater configurations would appear to use less power than auxiliary furnaces, the series resistance windings employed by each would continue to consume significant amounts of electrical power. Moreover, incorporating the heater windings as indicated requires additional manufacturing steps and increasing manufacturing complexity, particularly where the wires are to be threaded through fine holes. Lastly, heating of the solid electrolyte sensor cell would appear to be uneven and unpredictable. The sensor output is dependent upon temperature (see the Nernst equation above) and failure to maintain the sensor at a specific temperature or to measure the temperature of the sensor accurately will lead to errors in the detector output.

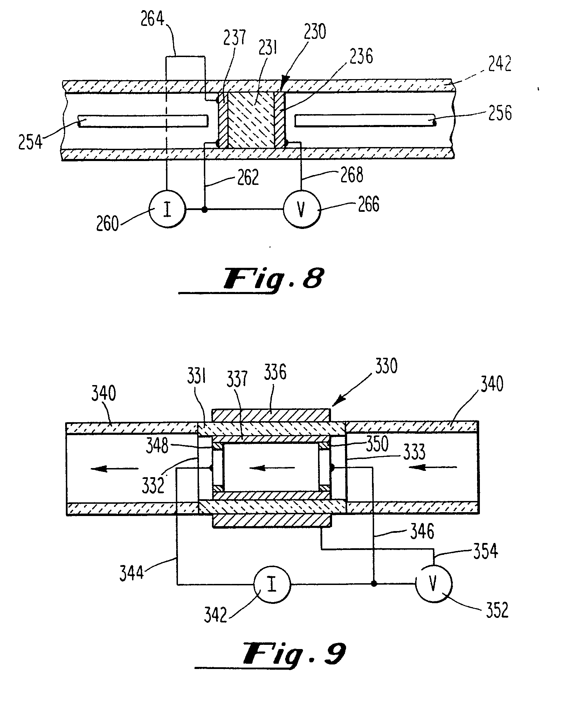

DE—A—3127472 discloses (see Figures 8—10 thereof) an apparatus comprising an electrochemical cell heatable to an elevated temperature for operation, the cell comprising a pair of electrodes, at least one of which is an integral electrode/heater means, and an electrolyte disposed between the electrodes and in contact therewith, the cell having current source means electrically connected in a circuit across said at least one integral electrode/heater means for circuiting an electric current through at least a portion of the said integral electrode/heater means to generate electrical resistance heating therein and thereby heat at least a portion of the electrolyte, to said elevated temperature, and means for measuring the voltage between the electrodes.

It has been found in a cell of the type just described that direct current and alternating currents having a low frequency of alternation disrupt the ionic equilibrium at the electrolyte/electrode interface of the cell, so that the heater current has an effect on the value of the emf developed by the cell. It has been discovered that by raising the frequency of the alternating current, this disruption of equilibrium can be reduced if not effectively eliminated. It further appears for the cells studied thus far, that low radio frequency range alternating currents (3000 to 300,000 Hz), specifically in a range between about 3000 and 200,000 Hz, have proved to have a sufficiently high frequency as to totally eliminate any apparent effect of the alternating heater current on the emf developed by the cell. The particular minimum frequency required varies at least with electrode composition. A current having a frequency between about 30,000 and 100,000 Hz is preferred for ease of interfacing the current source with the cell.

Accordingly, the present invention provides an apparatus comprising an electrochemical cell heatable to an elevated temperature for operation, the cell comprising a pair of electrodes at least one of which forms at least part of an integral electrode/heater means and an electrolyte disposed between the electrodes and in contact therewith, the cell having current source means electrically connected in a circuit across said at least one integral electrode/heater means for circuiting an electric current through at least a portion of the said integral electrode/heater means to generate electrical resistance heating therein and thereby heat at least a portion of the electrolyte to said elevated temperature, and means for detecting the voltage between the electrodes, said current source means comprising a source of radio frequency alternating current having a frequency of at least 3000 Hz, said integral cell electrode/heater means comprising a first electrode layer, and the electrolyte comprising a hollow, tubular portion having an outer surface and an opposing inner surface said first electrode layer covering and contacting a major proportion of said outer surface.

Mention is made here of EP—A—0030164, which describes an apparatus including an electrochemical cell which is heated to an elevated temperature by a radio frequency alternating current. However, it is to be noted that in EP—A—0030164 the heating current is passed from one electrode to the other through the electrolyte, and the heating which takes place is resistive heating within the electrolyte itself. In contrast in the present invention the heating current passes through the electrode which acts as the heater and the heating which takes place is resistive heating in the electrode. There is no flow of the alternating heating current through the electrolyte, or at most a negligible flow of such current, and therefore no resistive heating, or negligible resistance heating, in the electrolyte.

Mention is also made of EP—A—108179 (priority date claimed 8th October 1982, filing date 13th December, 1982, publication date 16th May 1984). This describes an apparatus comprising an electrochemical cell heatable to an elevated temperature for operation, the cell comprising a pair of electrodes, at least one of which forms part of an integral electrode/heater means and an electrolyte disposed between the electrodes and in contact therewith, the cell having alternating current source means electrically connected in a circuit across said at least one integral electrode/heater means for circuiting an electric current through at least a portion of the said integral electrode/heater means to generate electrical resistance heating therein and thereby heat at least a portion of the electrolyte to said elevated temperature, and means for detecting the voltage between the electrodes. The alternating current source means may comprise a source of radio frequency current having a frequency of at least 3000 Hz. Figure 9 of EP—A—108179 shows a solid electrolyte of hollow tubular form having on its outer surface an integral electrode/heater and having on its inner surface an opposing electrode. However, it will be seen that neither the integral electrode/heater nor the opposing electrode covers a major proportion of the surface on which it is situated.

The apparatus of the present invention may be incorporated, for example, into an oxygen sensing apparatus and develops an emf between two cell electrodes related to the concentration of oxygen in a sample gas directed against one of the electrodes.

While a preferred embodiment of the invention is an apparatus for generating an emf signal relating to oxygen concentration in a sample gas, the invention has much wider applicability. Similar solid state electrochemical cells are used to detect and measure other gaseous substances, such as oxides of carbon, nitrogen and sulfur, and hydrogen sulfide, to which some or all of the present invention may be beneficially employed. Furthermore, it is believed there are applications beyond gas detection and/or measurement which can use a solid state electrochemical cell which must be heated for operation and for which the present invention would be advantageous.

Preferably suitable means, such as a switch for turning the current source off and on, is provided for varying the current circuited by the current source through the integral cell electrode/heater. In this way, the heating of the electrode and the temperature of the electrochemical cell may be controlled.

Preliminary work demonstrated that an integral heater/electrode can be formed on a solid electrolyte by the application of a layer or film of electrically conductive material to a surface of the solid electrolyte. For oxygen concentration detection apparatus, the preferred layer is formed from a material comprising platinum. For long-term reliability, the layer is preferably chemically bonded to the solid electrolyte. Platinum has been bonded to zirconia by mixing the platinum with material which bonds to the zirconia. The solid electrolyte-integral heater/electrode configuration which has been examined and through which the invention has been successfully demonstrated comprises a tubular electrolyte element having an outer surface and opposing inner surface. The integral heater/electrode layer was applied covering a major portion of the electrolyte outer surface. This configuration minimizes heat loss and the development of undesired thermal gradients in the electrolyte.

Preferably, the alternating current is circulated through only one of the two electrodes.

The utility of the basic invention was first demonstrated in a solid state gas detector for detecting and measuring oxygen content of a sample gas. In terms of the present invention, such an apparatus may comprise an electrochemical cell having a solid electrolyte exhibiting, when heated, an increased conductivity to ions of a predetermined gaseous substance to be identified (oxygen in the preferred embodiment); a first porous electrode contacting the electrolyte at a first location and forming with the sample gas a gas electrode; and a second, reference electrode contacting the solid electrolyte at a second location for generating a known, predetermined potential with the solid electrolyte. The electrochemical cell thus defined develops an emf between the two electrodes related to the concentration of the particular compound in the sample gas. The apparatus further includes an electronic current source connected in a circuit across one of the two electrodes for heating at least a portion of the solid electrolyte between the electrodes by resistively heating the one electrode. The integral heater/electrode is formed, at least in part, by an electrically conductive layer contacting the electrolyte. Preferably the integral heater/electrode layer is chemically bonded to the solid electrolyte.

In a gas sensor configuration, the solid electrolyte is preferably formed in a hollow tubular shape having an outer tube surface and an opposing inner tube surface with the integral electrode/heater layer covering a major portion of the outer tube surface. The preferred apparatus is operated as a concentration difference detector. The first electrode layer on the outer tube surface is gas porous and a second electrode is formed by providing a second gas porous, electrically conductive layer to the inner tube surface opposite the outer tube surface contacting layer. A sample gas is directed against one of the two layers while a reference gas, having a known concentration of the particular gas to be detected, is directed against the remaining layer. The described apparatus are oxygen sensors and use a stabilized zirconia solid substrate electrolyte. Air, having a known concentration of oxygen, is used as a reference gas. The preferred layers are formed from a major proportion by weight of platinum and a minor proportion by weight of a substance chemically bonding with the zirconia.

The original apparatus was operated by resistively heating one of the electrodes. It was found that when the electrolyte reached a certain temperature, it too became electrically conductive. After the electrolyte reached a sufficiently elevated temperature for operation, preferably a predetermined elevated temperature, the resistive heating step was halted and the emf developed between the two cell electrodes measured. The method of heating the electrolyte to a predetermined elevated temperature is preferred in order to simplify the circuitry converting the emf output of the cell into a calibrated indication of oxygen concentration. Alternatively, the cell might be heated by resistively heating the one electrode and terminating the resistive heating step when the electrolyte has reached at least a temperature at which it is suitably conductive. After halting the resistive heating step, the emf of the cell and actual temperature of the electrolyte may be measured and the sample gas oxygen content determined by the Nernst equation or by appropriate circuitry known in the art for modifying the emf output to generate a signal related to the sample gas oxygen content.

The preferred electrochemical cell is formed by a solid electrolyte having a hollow tubular portion with an outer tubular surface and opposing inner tubular surface. The cell further includes an integral cell electrode/heater layer which covers substantially all but a pair of substantially parallel, opposing, longitudinally extending strips of the outer tube surface of the electrolyte. Preferably, the tubular portion of the solid electrolyte has a substantially circular cross-section with a uniform cross-sectional thickness. This allows substantially uniform heating of the electrolyte. Preferably too, the integral cell electrode/heater layer is also of a substantially uniform composition and thickness along at least a major portion of the outer tube surface so as to provide a uniform power density and uniform heating of the electrolyte.

The preferred cell is closed at one end by a hollow, substantially hemispherical portion of electrolyte integrally formed with the tubular portion at one end. The hemispherical portion of the electrolyte has a convex outer surface and an opposing concave inner surface and the integral electrode/heater layer covers at least a major portion of the convex outer surface so as to minimize the amount of heat lost through the hemispherical tip of the cell. In the preferred cell configuration, the opposing strips of exposed electrolyte outer tube surface extend from the remaining open end of the tubular portion of the electrolyte along the tube portion of the electrolyte to the hemispherical portion. In the preferred cell, the integral layer covers the entire convex outer surface of the hemispherical portion of the electrolyte tube again to reduce heat loss through the tip and thereby minimize the generation of thermal gradients within the electrolyte.

In the preferred embodiment of apparatus, the radio frequency alternating electric current is passed through a pair of leads in electrical contact with the electrode layer, each lead being electrically connected at the open end of the electrolyte with an end of one of the two halves of the layer formed by the division of the layer at that open end by opposing strips of exposed electrolyte tube surface. The integral layer preferably has a total maximum resistance at room temperature of about half an ohm or less and thus a resistance less than or equal to that amount between the lead contact points.

When used as a gas concentration difference cell, the preferred embodiment further includes a second electrode layer contacting the inner tube surface of the electrolyte opposite the outer layer along and extending along at least a portion of the length of the tube exposed by the two opposing strips. In a preferred embodiment, the electrode layers are gas porous and are formed from a material which is more than one-half by weight of platinum and the solid electrolyte is of a material which is more than one-half by weight zirconia.

The preferred cell is unique, inter alia, in that it is the first configuration known in which an yttria-stabilized zirconia solid electrolyte can be heated to an operating temperature of about 800°C or more by resistively heating only one of the two cell electrodes and no more than negligibly resistively heating the electrolyte. In other cell designs using an yttria-zirconia electrolyte, partial short circuiting of the cell heater current through the electrolyte and, on occasions, through the electrolyte and second cell electrode, has typically if not invariably occurred. In the preferred embodiment, no more than a negligible portion of the heater current passes through the electrolyte. The preferred embodiment allows heating of the electrolyte to a maximum temperature in a zone extending through the electrolyte beween the heater/electrode and a second opposing electrode and covering an area of at least several cm², the temperature of the electrolyte in the zone varying about 10°C or less than the maximum temperature. Important to achieving the creation of such a zone is the supplying of a substantially uniform electric power density over a major proportion of the integral electrode/heater layer contacting the solid electrolyte surface. This is achievable, in part, by the design of the preferred embodiment which minimizes the likelihood of short circuiting of the heater current through the electrolyte by using a pair of metal foil pads to join the ends of the leads, supplying the radio frequency current to the electrode/heater layer.

The electrochemical cell is preferably operated at a predetermined temperature. To accomplish this, temperature sensing means such as a thermocouple is provided for generating a signal related to the temperature of the cell and a control circuit responsive to the temperature signal is provided for controlling the power level of the alternating current supplied through at least a portion of the cell. In the described preferred embodiment, automatic cyclical on/off switching of the alternating current is used to modulate the power supplied to the cell.

In the accompanying drawings:

Figure 1 is a schematic view of a preferred apparatus, an *in situ* oxygen sensor, incorporating a solid state electrochemical sensing cell with integral heater/electrode according to the invention;

Figure 2 is a sectioned view of the apparatus depicting the *in situ* sensor probe assembly;

Figure 2a is an expanded view of the probe assembly of Figure 2 in the area 2a;

Figure 3 is a view of the preferred embodiment solid electrochemical cell;

Figure 4 is a lateral sectioned view of the cell in Figure 3;

Figure 5 is a cross-sectional view of the cell of Figure 3 and Figure 4 along the lines 5—5;

Figure 6 depicts graphically the temperature within the cell of Figures 3—5 as a function of position from the closed end of the cell;

Figure 7 depicts schematically the electrochemical cell temperature control circuitry of Figure 1;

Figure 8 depicts schematically a second gas detector embodiment incorporating a solid state electrochemical sensing cell with integral heater/electrode and disc-shaped solid electrolyte; and

Figure 9 depicts schematically yet another gas detector apparatus incorporating a solid state electrochemical sensor cell with integral heater/electrode and solid electrolyte with an open tube configuration.

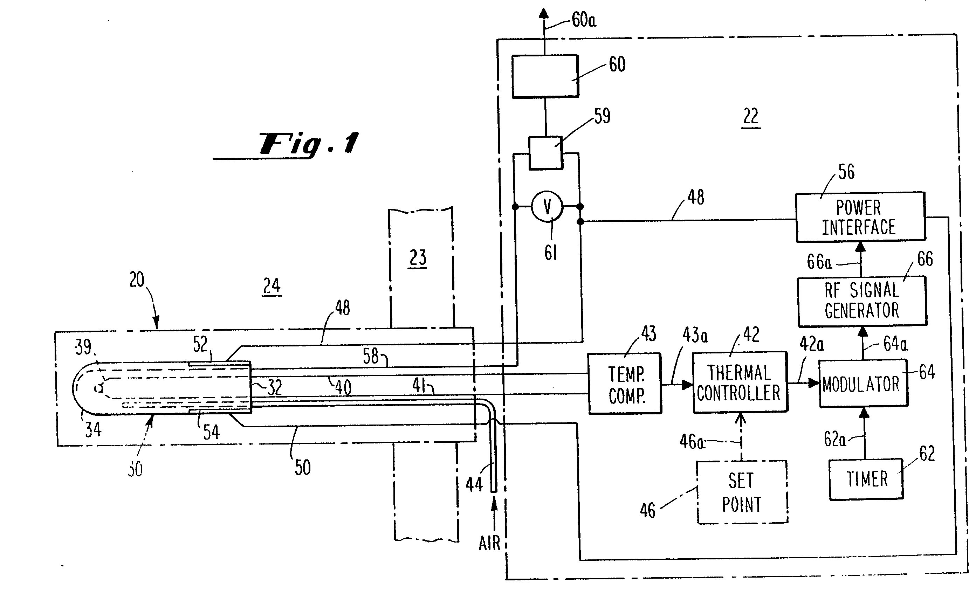

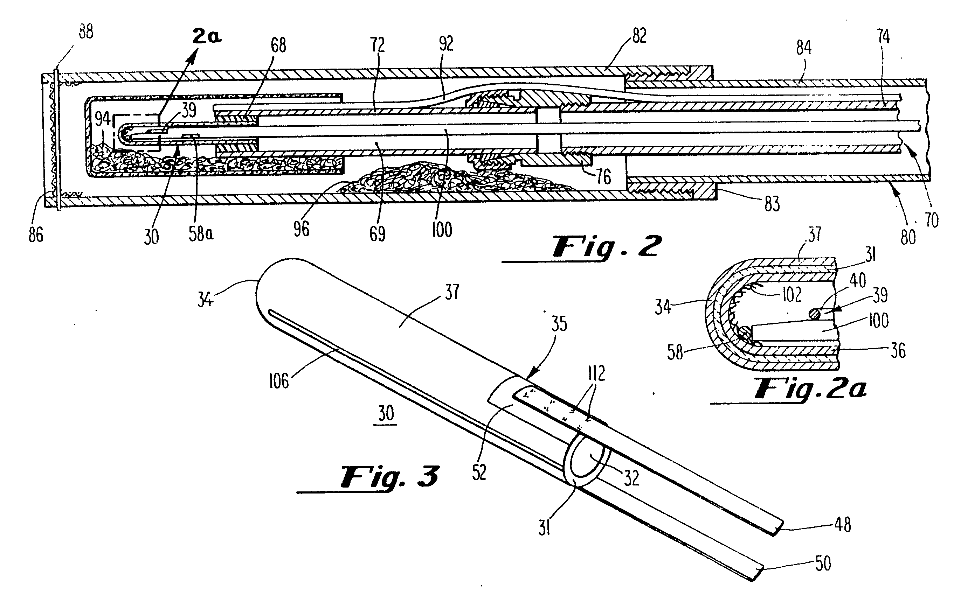

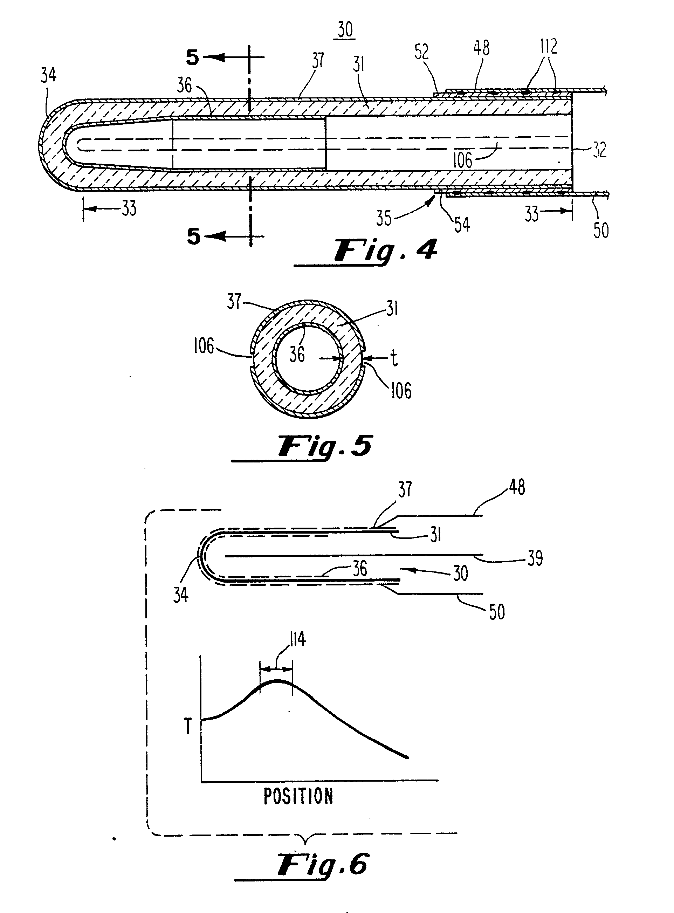

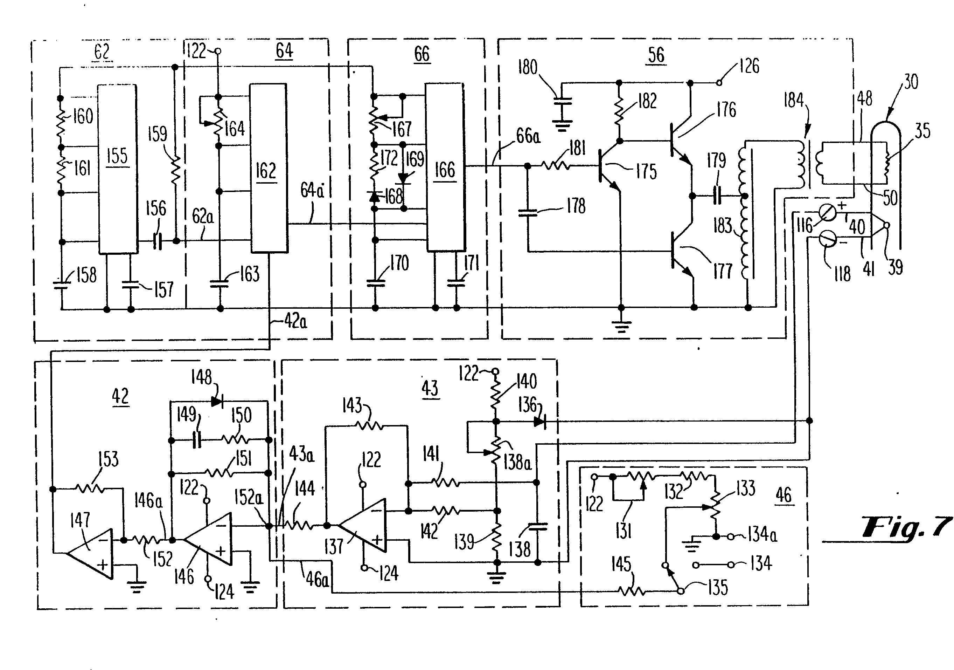

Figures 1 to 5 and 7 depict the components of the preferred embodiment of the present invention, a solid state, *in situ*, low temperature oxygen sensor for monitoring oxygen content in boiler stacks and the like. The apparatus is depicted schematically in Figure 1 and includes a probe assembly 20, which is depicted in greater detail in Figure 2 and is inserted through the wall 23 of the boiler flue or chimney 24 into the combustion gas stream, and related electronics 22 depicted in greater detail in Figure 7. The probe assembly 20 includes a tubular electrochemical sensor cell 30 together with protective and supporting elements further described with reference to Figure 2 to support and protect the electrochemical cell 30 in the flue 24. As is depicted in greater detail in Figures 3 to 5, the electrochemical cell 30 includes a solid electrolyte element 31 having a hollow tubular form with an open end 32 and an integral hemispherically formed closed end 34. The electrolyte tube 31 is an yttria (8% by weight) stabilized zirconia substrate fabricated by conventional ceramic forming techniques. As is better seen in Figures 4 and 5, an electrically conductive first electrode layer 37 covers substantially all of the outer surface of the electrolyte element 31. A similar but separate second layer 36 is provided on the inner surface of the electrolyte substrate 31 within the hemispherically closed half of the cell.

Returning to Figure 1, a thermocouple 39 or other suitable temperature sensing device is provided within the electrochemical cell 30 for sensing the electrolyte temperature. Leads 40 and 41 carry an electrical signal generated by the thermocouple 39 to a temperature compensator 43. The compensator 43 develops a voltage level signal passed on line 43a to a thermal controller 42 which controls the heating of the cell 30 by controlling the amount of electrical current circuited through the first (outer) electrode layer 37. The first (outer) electrode layer 37 is used as a sample gas electrode and is exposed to the gases within the flue 24. The second (inner) electrode layer 36 is used as the reference gas electrode and is supplied with ambient (outside) air, having a known concentration (20.95%) of oxygen, by a supply tube 44 or other appropriate means. A pair of pure nickel bus leads 48 and 50 are attached by means of pure platinum foil pads 52 and 54, respectively, to the first (outer) electrode layer 37 and connect the outer electrode layer 37 across a power interface circuit 56. The power interface 56 passes or circuits a radio frequency alternating electric current through the leads 48 and 50, pads 52 and 54, and first (outer) electrode layer 37, thereby resistively heating the first (outer) electrode layer 37 and raising the temperature of the covered solid electrolyte element 31 to an elevated level at which it becomes suitably conductive to oxygen ions. The first layer 37, pads 52 and 54, and the portions of the leads 48 and 50 contacting the pads 52 and 54, respectively, together form the integral cell electrode/heater 35 of the present invention. The second (inner) electrode layer 36 is connected by means of yet another electrical lead 58 in a circuit with the first (outer) electrode layer 37, foil pad 52 and lead 48 across a suitable electrical or electromechanical device for measuring or responding to the emf of the cell 30 developed between the second and first (inner and outer) electrode layers 36 and 37. For combustion control operations, the emf output of the cell 30 is preferably first amplified by a linear amplifier 59 and then converted to a signal linearly related to the oxygen content of the gas in the flue 24 by a logarithmic amplifier 60. The output of the logarithmic amplifier 60 is passed via a line 60a to a conventional closed loop combustion process controller (not depicted), which forms no part of the present invention. Alternatively, or in addition, the second and first (inner and outer) electrode layers 36 and 37 may be circuited across a suitable measuring device such as a high impedance voltmeter 61 for a visual indication of oxygen concentration in the gases within the flue 24. The output of the cell 30, measured by the emf developed between the first (outer) electrode layer 37 and second (inner) electrode layer 36, is representative of the difference in oxygen concentration between ambient air and the gases within the flue 24. The apparatus may be configured for operation at a fixed cell temperature or, if desired, the thermal controller 42 may be provided with a set point input 46 to control the operating temperature of the electrochemical cell. Completing the apparatus in Figure 1 are a timer circuit 62, a modulator circuit 64 and a radio frequency signal generator 66 which together controllably supply a radio frequency digital signal to the power interface 56 which converts the digital signal to a similar frequency, low-voltage alternating current.

Operation of the Figure 1 apparatus is as follows. The yttria-stabilized zirconia electrolyte 31 of the sensor cell 30 exhibits an extremely low oxygen ion conductivity until it is heated above a temperature of about 600°C. A voltage difference signal from the thermocouple 39, indicating the maximum tmperature of the electrolyte, is passed via leads 40 and 41 to the temperature compensator circuit 43 which compensates the thermocouple signal for the effect of connecting the leads 40 and 41 to the circuit elements 22. The compensated signal is amplified to a magnitude such that it equals the voltage level signal outputted by the set power circuit 46 along line 46a for an equal temperature. The amplified compensated thermocouple voltage level signal is outputted along line 43a to the thermal controller. The thermal controller 42 timer circuit 62 and modulator circuit 64 control the on-off cycling of the radio frequency signal generator 66. As presently embodied, the timer circuit 62 generates a digital timing pulse every 7 milliseconds on line 62a. The modulator circuit 64 responds to the pulse and switches the high frequency signal source 66 on for a fraction of the 7 millisecond period. The radio frequency signal generator 66 can be activated between about $12\frac{1}{2}\%$ and 97% of the 7 millisecond timing cycle. The duration of a high level signal outputted on the line 64a for activating generator 66 is controlled by the magnitude of the voltage level signal outputted by the thermal controller on line 42a. The radio frequency signal generator 66 outputs on line 66a, in the described embodiment, a 50 kHz square wave signal fluctuating between 0 and 15 volts. The square wave signal is converted by suitable circuitry in the power interface circuit 56 to a low voltage level (nominal +6 volts to −6 volts), alternating square wave current of the same frequency. Leads 48 and 50 circuit the high frequency alternating current generated by the power interface circuit 56 through the first outer electrode layer 37. It will be appreciated that as the electrolyte 31 exhibits a relatively low electrical conductivity at or below the operating temperature of the sensor 30, which is about 800°C, there is no flow or at most a negligible flow of alternating current through the electrolyte 31 or second (inner) electrode layer 36 in the preferred embodiment at the indicated voltage levels.

Referring now to Figure 2, the probe assembly 20 of Figure 1 is depicted in a side-sectioned view. The major purpose of the probe assembly 20 is to support and extend the electrochemical sensor cell 30 sufficiently far into the stack 24 to obtain a good reading while protecting the cell 30 from abrasive particles in the stack gases and cooling from the stack gas flow. The electrochemical sensor cell 30 is affixed by suitable means, such as a layer 68 of an electrically insulative ceramic cement, within the bore 69 of an extension tube 70. The tube 70 consists of an electrically insulating alumina tube section 72 of a convenient length so as to allow disassembly of the probe assembly 20 and the removal and/or replacement of the cell 30. The alumina tube section 72 is connected to à second extension tube section 74 of stainless steel or other suitable material by a Parker coupling 76 or other suitable means. The cell 30 and extension tube sections 72 and 74 are encased in a protective outer tube 80, formed in the preferred embodiments by lengths of stainless steel tubing 82 and 84 joined by a threaded coupling 83 welded to tube section 84. A wire mesh screen 86 is provided at the open end of the tube 80 to admit stack gases and to retain an insulating material 96, only a portion of which is depicted. The screen 86 is held in position by appropriate means such as pins 88, one of which is depicted in Figure 2. The present embodiment of the preferred oxygen sensor also presently includes a gas porous ceramic thimble 90 surrounding the cell 30 and proximal tip of the alumina extension tube section 72. A hollow tube 92, typically of stainless steel or other suitably heat and corrosion resistant material, is also currently provided with the thimble 90 for sensor calibration purposes. The tube 92 carries gas mixtures having a known oxygen content, such as air, to the interior of the thimble 90 and outer electrode layer 37 of the cell 30. In this way, *in situ* calibration of the apparatus can be accomplished. The space between the thimble 90, sensor 30 and extension tube 72 is filled with an appropriate electrically and thermally insulative material 94 such as alumina silicate, only a portion of which is illustrated in Figure 2 for purposes of clarity. Similarly, the space behween the porous ceramic thimble 90 and extension tube 70, section tube 72, coupling 76, and metal tube section 74, and the outer stainless steel protective tube 82 is also filled with a gas porous, thermally and electrically insulating material 96, again such as alumina silicate and again only a portion of which is illustrated in Figure 2 for clarity. The screen 86, outer insulation 96, porous ceramic thimble 90 and inner insulation 94 are all gas porous allowing stack gases to reach the outer electrode layer 37 (see Figure 3—5) of the sensor cell 30. These elements also filter solid particulates from the stack gases entering the probe 20.

Inserted into the hollow interior of the cell 30 is a four bore alumina tube 100. Two bores of the tube 100 contain leads 40 and 41 forming the thermocouple 39 which is exposed, as indicated in Figure 2, at the so-called "active zone" of the sensor 31. That is the location where the solid electrolyte element 31 is heated to its maximum temperature by the first (outer) electrode layer 37 acting as a resistive heater. A third bore of the alumina tube 100 acts as the air supply tube 44 carrying ambient air to the second (inner) electrode layer 36 of the sensor cell 30. The fourth bore of the alumina tube 100 carries the lead 58 contacting the second (inner) electrode layer 36 of the cell 30. Figure 2a, an enlarged view of the area 2a of Figure 2, shows one-half of the thermocouple 39, formed by the lead 40. Chromel-p and Alumel leads are used for a k-type thermocouple 39 and are joined where exposed from the four bore alumina tube 100. The inner electrode lead 58 as a pure platinum wire tip extending from the tube 100 which is joined within the tube 100 to a pure nickel wire at a point 58a in the vicinity of the junctions between the pure nickel bus leads 48 and 50 and the pure platinum pads 52 and 54, respectively. The purpose is to provide an inner electrode nickel-platinum junction which produces, at the sensor's operating temperature, a compensating emf that is substantially of equal magnitude and opposite polarity to that generated by the junction of the platinum foil pad 52 and nickel lead 48. The purpose is to minimize the magnitude of the cell constant C, of the apparatus as well as to reduce construction costs of the apparatus. A fine platinum wire mesh 102 is positioned about the tip of the tube 100 so as to be compressed against the second (inner) electrode layer 36 and lead 58 when the tube 100 is inserted into the cell 30. An electrical junction is thus formed between the second (inner) electrode layer 36, platinum mesh 102 and inner electrode lead 58. Leads 48 and 50 from the outer electrode layer are not depicted in Figure 2, but are covered, at least in part, by the cement layer 68 and extend down the bore 69 of the tube 70. An electrically insulative covering is provided as the leads 48 and 50 extend from the sensor 30 to prevent shorting or grounding.

While the preferred embodiment is an *in situ* oxygen sensor, the invention is not limited to *in situ* sensors or to *in situ* sensors having the indicated configuration. For example, the sensor 30 is easily adapted to an extractive mode. A sample gas may be supplied to the second (interior) electrode layer 36 or first (exterior) electrode layer 37, with air being supplied to the remaining electrode layer. Alternatively, the configuration of the *in situ* oxygen sensor 30 may be varied by inverting the orientation of the sensor cell 30 so that the cell 30 extends into and is protected by the alumina tube section 72. This would require modification to the positioning and configuration of the various electrode leads 48, 50, and 58 as well as to the thermocouple 39. In this orientation, the second (inner) electrode layer 36 would be used as the sample gas electrode while the first (outer) electrode layer 37 would be exposed to ambient air and used as the reference gas electrode of the cell 30. Moreover, while an ambient air reference gas electrode is formed in the interior of the preferred embodiment cell 30, it is conceivable that the solid state reference electrode can be formed by using methods and materials known to the art eliminating the need to supply air to the cell 30 interior. See, for example, the solid, oxygen reference electrode revealed in Patent US—A—3,883,408 to Kim et al. It is further envisaged that the present invention may be usefully employed in other areas, particularly in the detection and measurement of other gaseous compounds, apparatus which typically employ similar solid state electrochemical cells 30 utilizing electrolyte and electrode materials selected for the gaseous compound to be detected. See, for example, Patent US—A—4,282,078 to Chamberland et al. It is further believed that at least some inventive aspects of the preferred embodiment oxygen detector apparatus may be usefully employed in the area of oxygen and oxide concentration detection and measurement in fluids, such as molten metals.

Figures 3 to 5 depict in greater detail the configuration and construction of the preferred embodiment electrochemical cell 30. The configuration of the cell 30 including the integral cell electrode/heater 35 comprising the outer electrically conductive, gas porous first layer 37, pure platinum lead attachment pads 52 and 54 and the connected portions of pure nickel leads 48 and 50, are significant inventive aspects of the preferred embodiment. The emf developed by the cell 30 is controlled, in part, by the maximum temperature of the electrolyte 31. This is the temperature T of the Nernst equation previously referred to. It has been observed that thermal gradients in the solid electrolyte 31 leading to differing maximum temperatures for the inner and outer electrode layers 36 and 37 cause an offset in the magnitude of the emf actually developed by the cell 30 from that predicted by the Nernst equation. The Nernst equation is only valid where the maximum temperatures of the two electrodes are approximately equal. Furthermore, failure to locate and measure maximum temperature generated by the integral electrode/heater will lead to a run-away heating situation. In order to provide a reliable and accurate oxygen measuring apparatus, it is necessary to create an isothermal zone or enlarged area of maximum temperature extending substantially uniformly through and across the electrolyte (i.e. an "active region") between the first and second electrode layers 37 and 36 at a known location. The creation of such a zone allows the temperature to be accurately determined and regulated and thermal gradients between the inner and outer electrodes to be minimized so as to reduce or eliminate a changing and unpredictable cell emf offset.

It has been discovered that the best manner to provide such an isothermal region in the electrolyte is to provide an integral heater/electrode covering a larger surface area of the electrolyte 31 with a uniform power density. The preferred design minimizes the length to which ratio of the effective heater/electrode thereby minimizing total electrode resistance while still providing a substantially uniform power density over a larger area of the electrolyte. A solid stabilized zirconia electrolyte 31 is provided in the shape of a hollow tubular section 33 and an integral, hollow hemispherical portion 34. The preferred embodiment of sensor uses a partially yttria-stabilized zirconia isopressed tubular substrate having a 38 mm overall length, 6 mm outer diameter and maximum inner diameter of 4 mm. The tubular portion 33 of the electrolyte 31 is preferably of a uniform circular cross-section, as is best seen in Figure 5, and has a substantially uniform cross-sectional thickness $t$ at each cross-section. The solid electrolyte tube 31 is formed by conventional ceramic techniques, preferably isopressing for greater dimensional accuracy and more consistent quality. The cross-sectional thickness $t$ is substantially the same along most of the length of the tubular portion 33 of the electrolyte 31 but increases near the hemispherical portion 34 as a result of the isopressing process. It is desirale to form the electrolyte 31 with as substantially a uniform thickness $t$ throughout as possible for uniform heating. The preferred integral heater/electrode 35 is formed in part by the first layer 37 of an oxygen porous, electrically conductive material applied to all but a pair of narrow diametrically opposing strips 106 of the outer surface of the electrolyte 31. A metallic (preferably platinum) based paste or ink composition is coated as uniformly as possible on the outer surface of the electrolyte 31 so as to form a first electrode layer 37 of substantially uniform thickness and uniform electrical resistance. The coating is dried and, if appropriate, heated to sinter the electrode layer material to the electrolyte 31. An ink of the same material having a greater liquid content is used to "cement" the foil pads 52 and 54 to the first electrode layer 37. Suitable means such as spot welds 112 are used to affix the leads 48 and 50 to the foil pads 52 and 54, respectively, before attachment of the pads to the first electrode layer 37. The inner electrode layer 36 is formed by coating the inner surface of the electrolyte 31 with the same paste or ink.

The first (outer) electrode layer 37, being primarily metallic in all the embodiments being discussed, has a positive temperature coefficient of resistance, as do the metallic foil pads 52 and 54 and leads 48 and 50. Thus, the resistance of the electrode 35 increases with temperature. By employing a substantially uniformly thick first (outer) electrode layer 37, a resistive heater having a substantially uniform power density is formed over the tubular portion 33 of the electrolyte 31. The metallic foil pads 52 and 54 effectively reduce the surface resistivity of the integral heater/electrode 35 near the open end 32 of the electrolyte tube 31. This reduces the electric power density and the resulting generation of heat in the vicinity of the pads 52 and 54. The strips 106 cause the alternating current supplied by the power interface 56 to travel along the length of the first layer 37 and over the hemispherical portion 34 of the electrolyte 31. At the operating temperature of the sensor 30 (about 800°C), the first (outer) electrode layer 37 acts as a black body radiator. The rate of heat loss through radiation from the first (outer) electrode layer 37 is greater at the hemispherical portion 34 than along the length of the tubular portion 33 of the cell 30. Thus, the resistivity and power density of the first electrode layer 37 are effectively reduced at that end 34. Maximum heating therefore occurs in the region between the hemispherical portion 34 and the foil pads 52 and 54. Figure 6 depicts diagrammatically the form of the sensor 30 and the resulting nominal temperature distribution through the electrolyte 31 as a function of position along the electrolyte length. In embodiments of the sensor 30 formed from zirconia tubes having an outer diameter of 6 mm, an inner diameter of 4 mm and a length of approximately 40 mm, an "active zone" 114 of maximum temperature having no more than about 10°C variation over about 6 mm length of the electrolyte 31 can be generated beginning approximately 9 to 12 mm from the hemispherical tip 34.

In the depicted preferred embodiment of the cell 30, the strips 106 extend along the length of the outer surface of the electrolyte 31 from the open end 32 to the hemispherical portion 34. While it is not believed necessary to cover the entire hemispherical portion 34 with the first electrode layer 37, as depicted, it is presently suggested to do so as it is believed that covering the entire surface of the hemispherical portion 34 with the first (outer) electrode layer 37 reduces heat conduction from the "active zone" to the tip 34 thus minimizing the thermal gradient in the "active zone". It also has the effect of distributing the current density over a broader area preventing the possible generation of hot spots at the ends of the strips 106 where the hemispherical portion 34 meets the tubular portion 33 of the electrolyte body 31. The strips 106 are no wider than is necessary to prevent shorting of the first electrode layer 37 at the operating temperature of the sensor 30 and at the voltage of the alternating current used to heat the first (outer) electrode layer 37. For the preferred electrode layer material and an yttria-stabilized zirconia electrolyte substrate 31 operated at a temperature of about 800°C with an alternating current voltage fluctuating between about ±6V, gaps approximately 0.76 mm wide in the circumferential direction of the electrolyte 31 were found to be suitable. Gaps 106 should be kept as narrow as possible in the circumferential direction to reduce thermal gradients developing due to electrolyte cooling in the unheated gaps 106.

The area of attachment of the bus strips 48 and 50 to the first electrode layer 37 is a potential source of high electrical resistance and therefore of excessive and undesirable heat generation. For this reason and to reduce the overall power requirements of the cell 30, it is suggested that the resistance per unit length of the outer electrode 35 in the region of the intermediate foil pads 52 and 54 and bus strips 48 and 50 be kept to a value less than about 1/10th that in the "active zone". This is substantially achieved by the foil pads 52 and 54 bonded to the first (outer) layer 37. If necessary, it is believed that further reduction in the resistance of the integral heater/electrode 35 can be achieved by overlaying the bus leads 48 and 50 with another layer of similar metal foil. The surface resistivity of the integral heater/electrode 35 and of the first electrode layer 37 can be measured by the conventional four probe technique. The surface resistivity measurements reflect a changing resistance in the heater/electrode 35 and first layer 37. The surface resistivity of the preferred embodiment platinum-bismuth trioxide electrode material is about 0.05 ohm/square (±50%) or less for a typical 0.001 inch (0.025 mm) film at room temperature and provides an electrode layer in the preferred apparatus having a total resistance of less than about one-half ohm at room temperature between the first and second nickel lead/platinum foil junctions (48/50 and 49/51). The test may also be used to determine the uniformity of the first layer 37 as the surface resistivity of the first layer 37 is directly proportional to its thickness.

The depicted embodiment of the cell 30 with integral heater/cell electrode 35 is presently preferred for its superior performance given present fabrication constraints. Other electrode layer application techniques are being studied which may provide a means of controllably varying the thickness of the first electrode layer 37. When accomplished this may allow variation in the construction of the integral heater electrode 35 such as the elimination of the foil pads 50 and 52, the expansion of the active region or the use of even smaller electrolyte shapes.

The proper functioning of the preferred embodiment cell results from the proper balancing of a number of interrelated factors including tube and heater layer size, shape, composition and electrical resistance/conductivity characteristics, sensor operating temperature and heating current voltage. Variation of any parameter may result in some significant portion of the heating current shorting through the electrolyte or the electrolyte and remaining electrode. This will not necessarily affect the accuracy of the cell but will probably reduce its operating life.

Models of the preferred embodiment apparatus are presently being fabricated from yttria-stabilized (8% by weight) zirconia substrate tubes which are readily available in the size and shape of the solid electrolyte element 31 being employed. However, other suitable oxygen ion conducting solid electrolyte materials such as zirconia stabilized with other compounds and other oxides known in the art may be employed. Indeed, it has been observed that at the operating temperature of the cell 30 of approximately 800°C, calcia-stabilized zirconia is less electronically conductive than the yttria-stabilized zirconia, a factor not deemed significant for the preferred embodiment of the cell 30 and integral electrode/heater layer 37, but which may be important in other configurations to prevent a short circuiting of the alternating current through the solid electrolyte 31 during heating. For example, successful operation of a calcia-stabilized zirconia electrolyte cell 30 has been demonstrated. At an operating temperature of approximately 800°C, the calcia-stabilized zirconia is in order of magnitude less electrically conductive than the yttria-stabilized zirconia. However, the calcia-stabilized zirconia appears to be more susceptible to electrolytic decomposition from an alternating electric voltage than does the yttria material. The calcia-stabilized electrolyte may be useful in a short operating life application and/or in a different electrode/electrolyte configuration where the reduced electrical conductivity of the calcia-stabilized zirconia might prevent undesired shorting of the heater alternating electric current.

Another inventive aspect of the preferred apparatus is the material employed for the electrode layers 36 and 37. The material has been found to be one of the key components affecting the accuracy, sensitivity and longevity of the sensor. The ideal material used has to be applicable in controllable thicknesses on the electrolyte 31, form a strong bond (preferably chemical) with the electrolyte to resist spalling or other forms of physical deterioration, have the same thermal coefficient of expansion or otherwise be sufficiently ductile in the thicknesses used to prevent spalling or cracking and have the appropriate electrical resistivity preferably about 0.05 ohms/square or less, again for a typical 0.001 inch (0.025 mm) thick film. For oxygen concentration sensing with the integral heater/electrode 35 the material must also be permeable to gaseous oxygen. Because of its high catalytic activity for the oxygen equilibration reaction, platinum is a preferred oxygen detector electrode material. Nevertheless, platinum cannot be used alone as a heater material because it does not form a chemical bond to the zirconia substrate electrolyte 31 and, if resistively heated, will spall.

Initial experiments were performed using a previously known resistive heater material demonstrating a long-term physical stability with zirconia when heated. When dried, the material substantially comprised two parts by weight powdered platinum, one part by weight powdered gold and a small portion by weight of a glass ceramic frit binder. The materal was applied as an ink by brushing or dipping to form a coating approximately 25 microns thick which consolidated to a film approximately 10 microns thick when dried and fired. However, to obtain a one-half ohm resistance desired for the integral heater/electrode 35, thicker films were required. These were formed by coating and then firing successive layers onto the electrolyte 31. The most uniform coating results were obtained by dipping the electrolyte tube into the ink, slowly withdrawing it at a uniform rate and then rotating the tube in a furnace while drying. The particular composition used was a number 2408 Hanovia paste consisting of two parts platinum, one part gold with 3.7% by weight Corning Glass Works ≠≠186 BED glass frit to which was added approximately 45% of a proprietary Hanovia liquid medium comprising essentially Texanol. The frit is a lead oxide, titania, silica glass which crystallizes to form $PbTiO_3$ at about 700°C and which melts at about 1100°C. Three such coatings were applied to the outer and inner surfaces of a zirconia substrate tube. The substrate was dried and fired at approximately 900°C for one hour after each coating. The electrode layer material was extremely adherent and could not be scraped off with a knife. The lead in the glass frit appeared to react with the gold and platinum to form a low melting temperature alloy chemically bonding the layer to the substrate but also acting as a gaseous oxygen block. The prototype sensor was slow to reach equilibrium and, accordingly, slow to respond to oxygen concentration changes. As other, more promising electrode materials were discovered, further experimentation with the glass frit based material was suspended. However, it is believed that some improvement in the oxygen permeability of the glass frit material might be achieved by a variation of the components. In particular, a reduction in the amount of glass frit used might be made to balance improved integral cell electrode/heater layer oxygen porosity with reduced adherability of the layer to the zirconia substrate. Scoring of the layer also improved oxygen permeability. The glass frit material performed adequately when used as an integral heater/electrode reference with a conventional platinum layer reference electrode.

Initial experiments were directed in part to demonstrate that oxygen concentration could be measured using an electrode formed of this material. Although, this proved to be true, the search continued for materials providing greater adhesion to the zirconia electrolyte substrate, lower resistivity and, in particular, greater gaseous oxygen permeability for quicker sensor response.

A preferred integral electrode/heater layer material has been discovered possessing these qualities. In addition, the new material is used to provide equal resistivity in thinner layers than the glass frit material thereby reducing costs. The preferred material paste is supplied by Englehart Industries, Inc. and it is prepared by adding to their standard platinum sensor electrode paste, a small amount of bismuth trioxide. The paste is formed from a mixture of dry components comprising a major proportion by weight powdered platinum and a minor proportion by weight bismuth trioxide ($Bi_2O_3$) to which trace amounts of gold (0.1—0.5% by weight) and other materials are added. The dry components are mixed with a suitable liquid vehicle, again such as Texanol, to form a fluid mixture which can be applied to the zirconia substrate electrolyte 31 by a variety of methods. It was found that a coating approximately 0.001 inch thick (about 0.025 mm) provides an electrode layer 37 with an approximately one-half ohm or less toal resistance at the room temperature which could be heated to an operating temperature of about 800°C with as little as 15 watts of energy. The paste appears to form a dark residual layer, which may be an alloy, on the substrate after firing. Electron microprobe analysis has shown that the layer forms a chemical bond at the zirconia interface and that the bismuth is concentrated at the interface. Moreover, the material exhibited extremely high gaseous oxygen permeability as indicated by a virtually instantaneous response of test sensors to variations in oxygen concentrations in sample gases employed.

It is believed that bismuth trioxide in amounts of up to 10% by weight and preferably between about 1% and 5% by weight may be beneficially employed to form an oxygen porous integral heater/cell electrode layer. The bismuth trioxide appears to act as a flux, as does the gold. Thus, it is believed that the amounts of bismuth trioxide and gold may be varied from the indicated amounts, at least to some extent, without deleterious effect on the characteristics of the resulting layer. It is also suspected, but has not been verified to date, that the bismuth trioxide may be useful in forming electrode layers with base as well as noble metals, where base metals have heretofore been employed in the past. Moreover, the discovered composition may be advantageously employed as a gas electrode material where an integral heater/electrode application is not needed by virtue of its ability to chemically bond the preferred platinum electrode material to a zirconia substrate in an oxygen porous layer.

The preferred paste electrode material is presently being hand applied. A single application provides a layer approximately 0.001 inches (25 microns) thick after firing. Variations in the thickness of the outer electrode layer 37 of the preferred embodiment resulting from these application methods have been observed to produce a variation in surface resistivity or within about ±50% from an average value of about 0.05 ohms/ square mil (1 mil=25.4 microns) or less at room temperature. This has proved to provide adequately uniform heating. In this regard, it is believed that the zirconia electrolyte substrate 31 acts as a heat sink diffusing heat rapidly away from hot spots in the electrode layer 37 resulting from uneven layer thickness. Before application of the electrode paste to the outer surface of the electrolyte tube 31, the surface was masked for the slots 106. After each application of the electrode paste, the coated electrolyte substrate was heat-treated at about 980°C±15°C for about 15 minutes to sinter the paste. Overfiring appears to reduce the oxygen permeability of the resulting layer. One coat formed the outer layer 37; three coats of the paste were applied to the inner surface of the electrolyte substrate 31 to form the inner electrode layer 36. The coated substrate was heat-treated as previously indicated between each application. Three coats were used to form the inner electrode layer 36 because of the difficulty of applying the paste to the tube interior and the desire to ensure continuity of the inner electrode layer over the inner surface of the electrode substrate 31.

Other important inventive aspects of the preferred embodiment of oxygen sensor and integral heater electrode cell are the method and apparatus used to resistively heat the cell. It has been observed, in the course of the development of the preferred embodiment of apparatus, that the magnitude of the emf developed by the electrochemical cell was affected by the relatively low frequency alternating current (conventional 60 Hz line current) initially used for resistively heating prototype cells. When not influenced by a strong electric or magnetic field, it is believed the oxygen ions in the solid zirconia electrolyte immediately adjacent each electrode layer 36 and 37 will be in equilibrium with the oxygen partial pressure in the gas adjacent the electrode layer 36 and 37 and that the existence of a strong electric or magnetic field will disturb that equilibrium. It was observed that when a steady, low frequency, sinusoidal electric current (i.e., conventional 60 Hz line current) was applied to the heater electrode layer, it was found impossible to simultaneously obtain a meaningful measure of the potential developed between the inner and outer electrodes. A digital type voltmeter, which is in essence a periodic sampling instrument, will read out a wide range of potential levels. An analog type voltmeter will read out a steady average potential which, however, is far different from the potential which would be produced by that sensor when heated isothermally by a separate heat source such as a conventional auxiliary electric furnace. The shift in the average sensor emf developed due to the low frequency magnetic field surrounding the integral heater/electrode is in that direction (i.e., more negative) which is indicative of a lowering of the partial pressure of oxygen adjacent that heater/electrode. On some of the earliest embodiments of sensors, the 60 Hz current shifted the average emf by as much as about 225 millivolts. This necessitated following a repetitive heat first then measure cycle in using the early embodiments of the apparatus. It was discovered that as the frequency of the sinusoidal heating current is increased, the average value of the sensor potential shifts in the direction which is indicative of a more correct reading of the oxygen partial pressure at the heater/electrode. Above some sufficiently high frequency, the emf developed by the cell becomes stable and unaffected by the frequency of the heater current.

It has been observed in various embodiments of the present oxygen sensing apparatus that the permeability of the eletrode/heater layer to oxygen has a bearing on the minimum frequency of the heater alternating current that can be employed. The platinum-gold-glass frit material initially employed exhibited a rather poor oxygen permeability. The minimum usable alternating frequency current was in the vicinity of 200 kHz. This is in what is conventionally understood to be the low frequency portion (30—300 kHz) portion of the radio frequency spectrum. It was found that with respect to the preferred platinum-bismuth trioxide electrode/heater layer material, the minimum usable frequency was below 10 kHz which lies within what is generally understood to be the very low frequency portions (3—30 kHz) of the radio frequency spectrum. For ease of coupling between the power source and electrode/heater layer, it has been found preferable to employ a square wave alternating current in a range of about 30 kHz to 100 kHz. As previously indicated, the power interface circuit 56 of the preferred embodiment apparatus generates a 50 kHz square wave alternating current. Higher frequency alternating currents can be employed if power source switching losses are not excessive or interference with radio communication services does not pose a problem. Moreover, a sinusoidal alternating current may be employed in place of a square wave current. There is a significant amount of odd harmonic energy in square wave currents typically generated by existing equipment. Therefore, the fundamental frequency for a square wave current may be somewhat lower than that of a sinusoidal current to have an equivalent end effect on the observed electrochemical cell potential. As · the cell developed emf can be made insensitive to the heater current by employing a sufficiently high frequency current, a variety of oxygen concentration apparatus operating methods can be employed. For example, the alternating heater current can be continuously circuited through the integral heater/electrode layer and its amplitude varied in order to provide the required heat input to maintain a stable electrolyte temperature. Alternatively, a constant amplitude alternating current may be switched on and off for variable lengths of time in order to supply the required heat input. In that scheme, which is incorporated into the preferred embodiment disclosed, the off-time interval is held short enough, for example about 50 milliseconds or less, that the transient temperature excursions in the active part of the sensor cell are below the levels which would produce unacceptable variations in the emf developed by the cell.

As an example of the performance capability of the preferred embodiment apparatus, the preferred embodiment electrochemical cell with a platinum-bismuth trioxide electrode layers was configured in a heat-and-measure mode of operation where the instantaneous cell emf was interrogated by a sample and hold read out system immediately prior to the reapplication of each burst of radio frequency heater current. For a change in the off-interval period length from approximately 0.03 to 0.27 seconds, the change in the measured instantaneous potential for one typical experimental cell was in the worst instant 0.7 millivolts. Changing the partial pressure of the oxygen to the inner electrode from a level of 20.95 to 2.79% for cell operating nominal temperature 1073°K, the actual change in instantaneous potential developed by the experimental cell varied from 46.1 to 46.3 millivolts over the above indicated range of off-time interval lengths. According to the Nernst equation, such a concentration change at the indicated temperature should produce a theoretical change in the sensor potential of 46.5 millivolts. Over the same range of off-time interval lengths, the value of the potential observed with an average reading meter was substantially constant at 46.2 to 46.3 millivolts. Without correction, these numbers represent, in the worst case, an error in the determination of partial pressure of oxygen of less than about 2%.

Referring now to Figure 7, there is depicted in greater detail the components of the thermal controller 42, temperature compensator circuit 43, timer circuit 62, modulator circuit 64, high frequency signal source 66 and power interface 56, which together act as a closed loop temperature control circuit for the cell 30. The set point input circuit 46 is optionally provided in order to adjust the operating temperature of the cell 30. A suitable voltage level signal might otherwise be generated by another circuit element to represent a fixed operating temperature for the cell 30. The overall function of the circuit elements 42, 43, 46, 56 and 62 to 66 have been described above.

As is indicated in Figure 7, the set point circuit 46 includes a set point calibration circuit formed by a variable resistance 131 and a fixed resistance 132. Also included in the circuit 46 are an operator controlled potentiometer 133 with a temperature indicating control dial (not depicted) for operator selection of the cell operating temperature, automated set point input junctions 134 and 134a where an externally generated set point voltage signal may be inputted into the set point circuit 46 for automatic temperature control and a manually operated switch 135 for selecting operator or automatic set point control. The circuit 46 generates a voltage level signal passed on line 46a to the thermal controller circuit 42.

Also providing an input to the circuit 42 is the thermocouple temperature compensation circuit 43 which includes a cold junction compensation diode (type IN916) 136, operational amplifier (type OP07), 137, capacitor 138, variable resistor 138a and fixed resistors 139 to 143. Screwheads 116 and 118 represent a circuit junction block to which the thermocouple leads 40 and 41 are connected. The diode 136 is, in reality, located at the junction block so as to be at an identical temperature to that of the negative (Alumel) thermocouple lead 41. The operational amplifier 137 accepts at its negative input, the voltage level signal on the positive (Chromel) lead 40 of the thermocouple 39 and a temperature compensated voltage level derived from the cold compensation diode 136. These voltage level signals are summed together and amplified so that a compensating voltage due to change in room temperature emf at the termination of the input of the thermocouple 39 is added to the thermocouple signal, thus restoring the reverse emf effect caused by connecting the thermocouple leads 40 and 41 to the room temperature junction block. Capacitor 138 is provided to decouple the thermocouple emf from any fluctuating emf component which might be induced in the thermocouple 39 by the alternating heater current. Variable resistor 138a provides means for adjusting the temperature compensation. The remaining resistors provide, with the other elements, an effective gain of 122. The amplified and compensated voltage of the thermocouple 39 is passed on line 43a to the thermal controller 42.

The thermal controller circuit 42 is formed by first and second operational amplifiers (type 347) 146 and 147 with related feedback circuits and resistors 144, 145 and 151 adjusting the gain of signals on lines 43a, 46a and 146a, respectively. The first operational amplifier 146 together with diode 148, capacitor 149 and resistances 150 and 151 form a novel combination deviation amplifier and two mode (percent proportional band and integral functions) controller. The room temperature compensated thermocouple voltage outputted on line 43a is combined with the set point voltage level signal outputted on lines 46a at junction 152 and the combined voltages, together with feedback voltages are fed into the negative input of the first operational amplifier 146. The set point circuit and temperature compensation circuit voltage level signals are scaled for 5 millivolts/°C. The set point voltage level signal is the opposite polarity of that outputted by the compensation circuit amplifier 137 so that the algebraic sum of the output of the compensator circuit 43 and set point circuit 46, as computed by the amplifier 146, is equal to the proportional deviation error selected for optimal temperature control loop stability and desired whole temperature accuracy. The resistors 151 and 144 provide a fixed proportional band error (1%) which represents the allowable percentage difference between the voltage levels on lines 46a and 43a. Reset action occurs as a function of error integration across the capacitor 149. The combination of proportionalizing and reset action is selected to provide, in the preferred embodiment being described, optimal loop stability and whole temperature accuracy within ±1°C with expected oxygen sensor upsets. Diode 148 is provided to improve the response time of the two mode controller. The diode prevents the output of the amplifier 146 from rising much above zero, as would occur if there were a sudden call for a lower control temperature. The diode 148 reduces the integration requirement imposed on the capacitor 149 under such conditions allowing a faster return to control. The second operational amplifier 147 together with resistors 152 and 153 form a unity gain inverter which reverses the polarity of the output of the first amplifier 146 for driving the modulator circuit 64.

The timer circuit 62 and modulator circuit 64 are formed from a single integrated circuit timer element (type 556) together with related capacitors and resistances. The single integrated timer circuit is represented functionally by two separate timer elements 155 and 162 in Figure 7. The timer circuit 62 is formed by the timer element 155 together with capacitors 156, 157 and 158 and resistors 159, 160 and 161. Resistor 160 is connected between the first reset and discharge function of the integrated circuit timer while resistor 161 is connected between the first discharge and first threshold functions of the integrated circuit timer. Resistors 160 and 161 define the width (which is arbitrary) of the timing pulse outputted by the timer circuit 62. Capacitor 158 is provided between an input voltage source and the first trigger function of the integrated circuit timer and defines the time period (7 milliseconds in the described embodiment) between consecutive pulses outputted by the timer circuit 62. Capacitor 157 is provided to by-pass the first control voltage function. Resistor 159 and capacitor 156 smooth and shape the signal outputted by the timer circuit 62 on the line 62a.

The output of the timer 62 is passed via the line 62a to the modulator circuit 64 which includes the second timer element 162, capacitor 163 and variable resistor 164. The timer element 162 is formed by suitably wiring (starting from the upper left side of 162) the second reset, discharge, threshold, control voltage and output functions of the 556 integrated circuit timer. The capacitor 163 and variable resistor 164 determine the proportion of the 7 millisecond period for the output of the timer element 162 is high on line 64a. The resistor 164 is adjusted to provide for a maximum high output duration of 98% of the 7 millisecond pulse.

The timer element 155 is connected as a free running oscillator. The timer element 162 is connected in a monostable mode so as to be triggered by the negative going edge of each of the consecutive pulses from the timer element 155. The threshold triggering voltage of the timer element 162 is further modulated by the voltage level signal passed from the thermal controller circuit 42 along the line 42a. The timer circuit 162 thus configured acts as a pulse width modulated oscillator. With consecutive pulses being ouputted by the timer element 155 at 7 millisecond intervals, the maximum pulse width of the high output level signal outputted by the timer element 162 is adjusted to 6.8 milliseconds by the variable resistor 164 with a threshold voltage of 12.5 supplied from the thermal controller circuit 42. The minimum stable pulse width supplied by the timer element 162 in the depicted configuration is one millisecond with a threshold voltage of 2 from the thermal controller 42. Thus, the total range of effective thermal controller control of the modulator circuit 64 is approximately between 12.5% and 97% of the 7 millisecond duty cycle. The on/off (high/low) voltage level signal outputted by the timer element 162 is passed via line 64a to the radio frequency signal generator circuit 66.

The circuit 66 is formed by an integrated circuit timer 166 (type 555), variable resistor 167, diodes 168 and 169, capacitors 170 and 171 and fixed resistance 172. The timer 166 is also wired as a free running oscillator generating a square wave output signal fluctuating between levels of about 0 and +15 volts at a frequency of 50 kHz. The output of the oscillator 162 is switched on and off by applying the width modulated pulses outputted by the modulator circuit 64 on line 64a to the reset function of the type 555 timer element 166. The frequency of the output of the timer circuit 166 is determined by the combination of capacitor 170 and resistors 167 and 172. The variable resistor 167 is connected between the power input (Vcc) and discharge functions of the 555 timer. The resistor 172 and diodes 168 and 169 are connected between the discharge and threshold functions of the timer while the line 64a feeds into the reset functions. Capacitor 171 by-passes the voltage control function. The variable resistor 167, fixed resistor 172 and diodes 168 and 169 are provided to cause the timer element 166 to generate a symmetrical square wave with equal on and off time periods. Actual adjustment is provided by variable resistor 167. Diodes 168 and 169 provide an alternative discharge path for the voltage charge on capacitor 170 which itself is selected to determine the frequency of the signal (50 kHz) outputted on the line 66a. This ensures that the signal generated by the signal generator 66 has an on time of less than or equal to 50% of the duty cycle. This is necessary in order to control symmetric AC heating current through a power interface circuit drive coupling capacitor 179.

The power interface circuit 56 is formed in the preferred embodiment by a novel charge-discharge square wave alternating current signal generator formed by a first transistor (type 2N2218) 175, second and third transistors (type 2N6284) 176 and 177, AC non-polarized capacitors (polyfilm) 178 and 179, an electrolytic capacitor 180, and fixed resistor elements 181 and 182. The transistors 175, 176 and 177 form a drive circuit. The transistor 175 is an inverter the purpose of which is to provide a 180° phase inversion of the 50 kHz oscillator signal outputted by the radio frequency signal source 66, along with necessary current amplification to drive the transistor 176. The oscillator 166 drives the transistor 177 through the coupling capacitor 178. The driving transistors 176 and 177 alternately cause a direct current to flow through the transistor 176 into capacitor 179 and then cause another direct current to flow from capacitor 179 through transistor 177 to a common circuit return. Thus, the capacitor 179 is alternately charged by the transistor 176 and discharged through the transistor 177 at a frequency equal to that of the driving frequency (50 kHz) provided by the modulator 66. Resistors 181 and 182 adjust the voltages passed to the base and collector, respectively, of transistor 175. Capacitor 180 provides a by-pass for a +45 volt power source fed into the power interface 56 at location 126. The drive coupling capacitor 179 decouples the DC component from the AC current generated by the resistors 176 and 177 causing an alternating square wave current fluctuating between about +20 and −20 volts to be passed to the toroid auto transformer 183. The charge-discharge action of the capacitor 179, unlike the conventioal push-pull configuration, requires only one power source applied at the location 126. The circuit as configured outputs a maximum power of about 30 to 40 watts. The present drive circuit has the advantages of reduced cost, size and improved reliability over more complicated push-pull circuits and is an improved device where a simple on/off square wave alternating current is needed. The toroid auto transformer 184 steps up the voltage passed to the conventional step-down (isolating toroidal) transformer 183 which, in turn, increases the current passed through the heater circuit 35 of the cell 30 from a level of about 1 amp to about 6 to 7 amps and reduces the voltage accordingly.

The depicted circuit utilizes three power sources: +15 volts denoted by junctions 122, −15 volts denoted by junction 124 and +45 volts denoted by junction 126. The following other circuit elements were used.

RESISTORS

| Resistance | Element resistors |
| --- | --- |
| 1 ohms | 139 |
| 200 ohms | 138a (maximum) |
| 330 ohms | 182 |
| 1k ohms | 150 & 181 |
| 5k ohms | 131 (maximum) |
| 8.2k ohms | 141, 142 |
| 10k ohms | 133 (potentiometer) 140, 152 & 153 |
| 15k ohms | 159, 172 |
| 18k ohms | 132 |
| 20k ohms | 160 |
| 25k ohms | 167 (maximum) |
| 100k ohms | 144, 145, 161 & 164 (maximum) |
| 1 mega ohm | 143 |

CAPACITORS

| Capacitance | Element |
| --- | --- |
| 1 microfarad | 178 |
| 10 microfarad | 138 & 179 |
| 100 microfarad | 180 |
| 0.001 farads | 149 & 170 |
| 0.0015 farads | 156 |
| 0.1 farad | 157, 158, 163 & 171 |

While the preferred embodiment of the invention has been described in terms of a low temperature gaseous oxygen detector incorporating a closed ended tubular electrochemical sensor cell 30, other sensor cell configurations are envisaged to employ the inventive aspects described above. For example, one common configuration for an oxygen or gaseous oxide detector is depicted schematically in Figure 8 and comprises a solid state electrochemical cell 230 having a disc shaped solid electrolyte 231, a first gas electrode layer 237 on one outer surface of the electrolyte disc 231 and a second gas electrode layer 236 formed on the opposing outer surface of the electrolyte disc 231. Commonly used in the extractive type detector, suitable means such as a non-conductive alumina tube 242 is used to fixedly mount the cell 230 and to seal opposing chambers 250 and 252 in which a sample gas and a reference gas, respectively, are circulated. The gases are brought into the chambers 250 and 252 to the respective electrode layers 237 and 236 by suitable piping such as quartz or alumina tubes 254 and 256 respectively. For further information regarding the construction of this type of a sensor, see, for example, Patent US—A—4,282,078 to Chamberland et al. One electrode layer 237 is wired by leads 264 and 262 to an alternating electric current source 260 in order that the layer 237 may be used as an integral cell electrode/heater. In addition, the lead 262 branches into a potentiometer 266 or other suitable high impedance device for responding to emf developed between the two electrode layers 237 and 236. Lead 268 completes the circuit between the electrode layers 237 and 236 through the potentiometer 266. The solid electrolyte wafer 231 is envisaged as having circular outer surfaces upon which the electrode layers 237 and 236 are applied. Electrode patterns which have been devised previously for providing substantially large areas of uniform heating for use as stove elements and the like are described in Patent US—A—3,813,520 and US—A—3,848,111. It is envisaged that these patterns, or simple modifications of them, may be employed to provide sufficiently large, substantially isothermal active areas in the cell 230 to allow use of the apparatus as an accurate measuring device. Again, the technology has application both to the detection and measurement of oxygen and to the detection and measurement of other gaseous compounds including various gaseous oxides. Again, a solid reference electrode electrochemically suited for the chemical reaction driving the sensor 230 may be employed in place of the gaseous reference electrode layer 236. Also, the two electrode layers 237 and 236 may be circuited through separate alternating current generators and used as combination heater/electrodes.

Yet another potential sensor configuration employing an integral heater/electrode which is envisaged is a flow through tube such as is depicted in Figure 9. An electrochemical sensor cell 330 is provided with a tubular solid electrolyte substrate 331, again of zirconia or other solid electrolyte material suitable for the electrochemical application, having opposing open ends 332 and 333. An inner electrode layer 337 is provided along the inner tubular surface of the substrate 331 while a second electrode layer 336 is applied to the outer surface of the tubular substrate 331. The interior of the tubular substrate 331 would be sealed from its exterior by suitable means such as alumina tubes 338 and 340 circulating a reference gas or sample gas mixture through the interior of the cell 330. The cell 330 is again heated by resistively heating one or both of the electrode layers 337 and 336. In the depicted embodiment, a high frequency current source 342 is connected by means of bus leads 344 and 346 to circular terminals 348 and 350 at opposing ends 332 and 333 of the inner electrode layer 337. Again, the inner electrode 337 is electrically connected with the outer electrode 336 across a potentiometer 352 or other high impedance circuit for responding to the emf developed by cell 330.

## Claims

1. An apparatus comprising an electrochemical cell (30, 230, 330) heatable to an elevated temperature for operation, the cell comprising a pair of electrodes (36, 37; 236, 237, 336, 337), at least one of which forms at least part of an integral electrode/heater means (35; 237; 337, 348, 350) and an electrolyte (31, 231, 331) disposed between the electrodes and in contact therewith, the cell having current source means (56, 66, 260, 342) electrically connected in a circuit across said at least one integral electrode/heater means (35; 237; 337, 348, 350) for circuiting an electric current through at least a portion of the said integral electrode/heater means (35; 237, 337, 348, 350) to generate electrical resistance heating therein and thereby heat at least a portion of the electrolyte (31, 231, 331) to said elevated temperature, and means (59—61, 266, 352) for detecting the voltage between the electrodes (36, 37; 236, 237, 336, 337) said current source means (56, 66, 260, 342) comprising a source of radio frequency alternating current having a frequency of at least 3000 Hz, said integral cell electrode/heater means (35; 237; 337, 338, 350) comprising a first electrode layer (37, 237, 337), and the electrolyte (31) comprising a hollow, tubular portion (33) having an outer surface and an opposing inner surface, said first electrode layer (37) covering and contacting a major portion of said outer surface.

2. An apparatus according to Claim 1, wherein said electrolyte (31, 231, 331) is a solid at said elevated temperature.

3. An apparatus according to Claim 2, wherein said first electro layer (37) is formed from a material comprising platinum.

4. An apparatus according to Claim 2 or 3, wherein a chemical bond is formed between at least a portion of said first electrode layer (37) and said solid electrolyte (31).

5. An apparatus according to any preceding claim wherein the first electrode layer (37) is gas porous.

6. An apparatus according to any preceding claim, wherein said current source means further comprises means (42) for controlling the amount of the electric current circuited through the integral cell electrode/heater means (35).

7. An apparatus according to any preceding claim wherein said first electrode layer (37) covers substantially all but a pair of opposing, substantially parallel, longitudinally extending strips (106) of the outer surface of the tubular portion (33).

8. An apparatus according to Claim 7, wherein said electrolyte tubular portion (33) has a substantially circular cross-sectional with a substantially uniform cross-sectional thickness (t) and said first electrode layer (37) has a substantially uniform composition and thickness along at least a major proportion of the outer surface.

9. An apparatus according to Claim 7 or 8, wherein said solid electrolyte (31) further comprises a hollow, substantially hemispherical portion (34) integrally formed with the tubular portion (33) closing one open end of the tubular portion (33), the hemispherical portion (34) having a convex outer surface and an opposing concave inner surface and wherein the first electrode layer (37) covers at least a major proportion of the convex outer surface.

10. An apparatus according to Claim 9, wherein said opposing parallel strips (106) extend from a remaining open end (32) of the tubular portion (33) of the electrolyte (31) to the hemispherical portion (34) of the electrolyte and said first electrode layer (37) covers the entire convex outer surface.

11. An apparatus according to Claim 9, wherein said opposing parallel strips (106) of exposed electrolyte extend from near the remaining open end (32) of the tubular portion (33) of the electrolyte (31) and divide said first electrode layer (37) into two portions, the two layer portions beginning near the remaining open end (32) of the tubular portion (33) of the electrolyte (31) and joining near the hemispherical portion (34) of the electrolyte to form the first electrode layer, and said first electrode layer has a maximum total resistance of about one-half ohm or less at room temperature.

12. An apparatus acording to Claim 10, further comprising a second electrode layer (36) contacting said inner tube surface of the electrolyte (31) opposite said first electrode layer (37) and extending along at least a portion of the length of the tubular portion (33) exposed by the two opposing strips (106), the second electrode layer (36) forming the other of the pair of electrodes.

13. An apparatus according to Claim 12, wherein the two electrode layers (36, 37) are each formed from a material comprising a major proportion by weight of platinum and are porous to gaseous oxygen, and said solid electrolyte (31) is formed from a material comprising a major proportion by weight of zirconia.

14. An apparatus according to any preceding claim, further comprising temperature sensing means (39) for generating a signal related to the temperature of the electrochemical cell; and control means (42) responsive to the temperature signal for controlling the power level of the alternating current supplied by said current source means (66, 56) through said cell (30).

**Patentansprüche**

1. Vorrichtung, bestehend aus einer elektrochemischen Zelle (30, 230, 330), die zum Betrieb auf eine hohe Temperatur erhitzbar ist, wobei die Zelle ein Elektrodenpaar (36, 37; 236, 237, 336, 337), von dem wenigstens eine Elektrode wenigstens einen Abschnitt einer einstückigen Elektrode/Erhitzungseinrichtung (35; 237; 337, 348, 350) bildet, und einen Elektrolyt (31, 231, 331) aufweist, der zwischen den Elektroden und in Berührung mit diesen angeordnet ist, wobei die Zelle eine Stromquelleneinrichtung (56, 66, 260, 342) besitzt, die elektrisch in einer Schaltung über die wenigsetens eine einstückige Elektrode/Erhitzungseinrichtungen (35; 237; 337, 348, 350) für das Durchleiten eines elektrischen Stroms an wenistens einen Abschnitt der einstückigen Elektrode/Erhitzungseinrichtung (35; 237; 337, 348, 350) verbunden ist, um in dieser eine elektrische Widerstandserhitzung zur erzeugen und dadurch mindestens einen Teil des Elektrolyts (31, 231, 331) auf die erhöhte Temperatur zu erhitzen, und aus einer Einrichtung (59—61, 266, 352) zur Ermittlung der Spannung zwischen den Elektroden (36, 37; 236, 237, 336, 337), wobei die Stromquelleneinrichtung (56, 66, 260, 342) eine Hochfrequenzwechselstromquelle mit einer Frequenz von wenistens 3000 Hz aufweist, wobei die einstückige Zellenelektrode/Erhitzungseinrichtung (35; 237; 337, 348, 350) eine erste Elektrodenschicht (37, 237, 337) aufweist und der Elektrolyt (31) einen hohlen rohrförmigen Elektrolytabschnitt (33) mit einer Außenoberfläche und einer gegenüberliegenden inneren Oberfläche besitzt, und wobei die erste Elektrodenschicht (37) einen größeren Anteil der Außenoberfläche bedeckt und kontaktiert.

2. Vorrichtung nach Anspruch 1, dadurch gekennzeichnet, daß der Elektrolyt (31, 231, 331) bei der erhöhten Temperatur ein fester Körper ist.

3. Vorrichtung nach Anspruch 2, dadurch gekennzeichnet, daß die erste Elektrodenschicht (37) aus einem Platin enthaltenden Material gebildet ist.

4. Vorrichtung nach Anspruch 2 oder 3, dadurch gekennzeichnet, daß zwischen wenigstens einem Abschnitt der ersten Elektrodenschicht (37) und dem festen Elektrolyt (31) eine chemische Bindung gebildet ist.

5. Vorrichtung nach einem vorangehenden Anspruch, dadurch gekennzeichnet, daß die erste Elektrodenschicht (37) gasporös ist.

6. Vorrichtung nach einem vorangehenden Anspruch, dadurch gekennzeichnet, daß die Stromquelleneinrichtung weiterhin eine Einrichtung (42) für die Kontrolle der Größe des durch die einstückige Zellenelektrode/Erhitzungseinrichtung (35) geleiteten elektrischen Stroms aufweist.

7. Vorrichtung nach einem vorangehenden Anspruch, dadurch gekennzeichnet, daß die erste Elektrodenschicht (37) im wesentlichen bis auf ein Paare gegenüberliegender, im wesentlichen paralleler sich in Längsrichtung erstreckender Streifen (106) die gesamte Außenoberfläche des rohrförmigen Elektrolytabschnitts (33) bedeckt.

8. Vorrichtung nach Anspruch 7, dadurch gekennzeichnet, daß der rohrförmige Elektrolytabschnitt (33) einen im wesentlichen kreisförmigen Querschnitt mit einer im wesentlichen gleichförmigen Querschnittsdicke (t) besitzt, und daß die erste Elektrodenschicht (37) eine im wesentlichen gleichförmige Zusammensetzung und Dicke längs wenigstens einem größeren Anteil der äußeren Oberfläche aufweist.

9. Vorrichtung nach Anspruch 7 oder 8, dadurch gekennzeichnet, daß der feste Elektrolyt (31) weiterhin einen hohlem im wesentlichen halbkugelförmigen Abschnitt (34) besitzt, der einstückig mit dem rohrförmigen Elektrolytabschnitt (33) gebildet ist und eine offenes Ende des rohrförmigen Elektrolytabschnitts (33) abschließt, wobei der halbkugelförmige Abschnitt (34) eine konvexe äußere Oberfläche und eine gegenüberliegende konkave innere Oberfläche besitzt, und wobei die erste Elektrodenschicht (37) wenigstens einen größeren Anteil der konvexen Außeroberfläche bedeckt.

10. Vorrichtung nach Anspruch 9, dadurch gekennzeichnet, daß sich die gegenüberliegenden parallelen Streifen (106) von einem verbleibenden offenen Ende (32) des rohrförmigen Elektrolytabschnitts (33) des Elektrolyts (31) zu dem halbkugelförmigen Abschnitt (34) des Elektrolyts erstrecken, und daß die erste Elektrodenschicht (37) die gesamt konvexe Außeroberfläche bedeckt.

11. Vorrichtung nach Anspruch 9, dadurch gekennzeichnet, daß sich die gegenüberliegenden parallelen Streifen (106) des freiliegenden Elektrolyts von der Nähe des verbleibenden offenen Endes (32) des rohrförmigen Elektrolytabschnitts (33) des Elektrolyts (31) erstrecken und die ersten Elektrodenschicht (37) in zwei Abschnitte unterteilt, wobei die beiden Schichtabschnitte nahe dem verbleibenden offenen Ende (32) des rohrförmigen Elektrolytabschnitts (33) des Elektrolyts (31) beginnen und sich nahe dem halbkugelförmigen Abschnitt (34) des Elektrolyts zur Bildung der ersten Elektrodenschicht verbinden, und daß die ersten Elektrodenschicht bei Raumtemperatur einen maximalen Gesamtwiderstand von etwa einem halbem Ohm besitzt.

12. Vorrichtung nach Anspruch 10, gekennzeichnet, durch eine zweite Elektrodenschicht (36), die die innere Rohroberfläche des Elektrolyts (31) auf der der ersten Elektrodenschicht (37) gegenüberliegenden Seite kontaktiert und sich längs wenigstens eines Abschnitts der Länge des rohrförmigen Elektrolytabschnitts (33), der durch die beiden gegenüberliegenden Streifen (106) freiliegt, erstrecken, wobei die zweite Elektrodenschicht (36) das andere Elektrodenpaar bildet.

13. Vorrichtung nach Anspruch 12, dadurch gekennzeichnet, daß die beiden Elektrodenschichten (36, 37) jeweils aus einem Material gebildet sind, das einen größeren Gewichtsanteil an Platin besitzt und gegenüber gasförmigem Sauerstoff porös ist, und daß der feste Elektrolyt (31) aus einem Material gebildet ist, das einen größeren Gewichtsanteil an Zirkonerde aufweist.

14. Vorrichtung nach einem vorangehenden Anspruch, gekennzeichnet, durch eine Temperatursensoreinrichtung (39) zur Erzeugung eines auf die Temperatur der elektrochemischen Zelle bezogenen Signals, und durch eine Regelungseinrichtung (42), die auf das Temperatursignal zur Regelung der Stromhöhe des Wechselstroms anspricht, der von der Stromquelleneinrichtung (66, 56) über die Zelle (30) zugeführt wird.

## Revendications

1. Un appareil comprenant une cellule électrochimique (30, 230, 330) chauffable à une température de fonctionnement élevée, la cellule comprenant une paire d'électrodes (36, 37; 236, 237; 336, 337) dont l'une au moins forme au moins une partie d'une électrode à moyen de chauffage intégré (35; 237; 337, 348, 350) et un électrolyte (31, 231, 331) disposé entre les électrodes et en contact avec elles, la cellule comportant une moyen formant source de courant (56, 66, 260, 342) connecté électriquement dans un circuit passant par la ou lesdites électrodes à moyen de chauffage intégré (35; 237; 337, 348, 350) pour faire circuler un courant électrique à travers au moins une portion de ladite électrode à moyen de chauffage intégré (35; 237; 337, 348, 350) afin de réaliser au sein de celle-ci au chauffage par résistance électrique et en chauffant ainsi au moins une portion de l'électrolyte (31, 231, 331) à ladite température élevée, et des moyens (59—61, 266, 352) propres à détecter la tension électrique entre les électrodes (36, 37; 236, 237; 336, 33) ledit moyen formant source de courant (56, 66, 260, 342) comprenant une source de courant alternatif à haute fréquence ayant une fréquence d'au moins 3000 Hz, ladite électrode de cellule à moyen de chauffage intégré (35; 237; 337, 338, 350) comprenant une première couche d'électrode (37, 237, 337), et l'électrolyte (31) comprenant une portion tubulaire creuse (33) présentant une surface externe et une surface interne opposée, ladite première couche d'électrode (37) recouvrant et étant en contact avec la majeure partie de ladite surface externe.

2. Un appareil selon la revendication 1, dans lequel ledit électrolyte (31, 231, 331) est un solide à ladite température élevée.

3. Un appareil selon la revendication 2, dans lequel ladite première couche d'électrode (37) est formée d'un matériau comprenant du platine.

4. Un appareil selon la revendication 2 ou 3, dans lequel une liaison chimique est formée entre au moins une portion de ladite première couche d'électrode (37) et ledit électrolyte solide (31).

5. Un appareil selon l'une quelconque des revendications précédentes, dans lequel la première couche d'électrode (37) est poreuse pour les gaz.

6. Un appareil selon l'une quelconque des revendications précédentes, dans lequel ledit moyen formant source de courant comprend en outre un moyen (42) propre à régler la quantité de courant électrique traversant l'électrode de cellule à moyen de chauffage intégré (35).

7. Un appareil selon l'une quelconque des revendications précédentes, dans lequel ladite première couche d'électrode (37) recouvre sensiblement la totalité, à l'exception d'une paire de bandes longitudinales, opposées, sensiblement parallèles (106), de la surface externe de la portion tubulaire (33).

8. Un appareil selon la revendication 7, dans lequel ladite portion tubulaire (33) de l'électrolyte présente une section transversale sesnsiblement circulaire avec une épaisseur de section (t) sensiblement uniforme et ladite première couche d'électrode (37) présente une composition et une épaisseur sensiblement uniformes le long d'au moins la majeure partie de la surface externe.

9. Un appareil selon la revendication 7 ou 8, dans lequel ledit électrolyte solide (31) comprend en outre une portion creuse sensiblement hémisphérique (34) formée d'un seul tenant avec la portion tubulaire (33) et fermant l'une des extrémités ouvertes de la portion tubulaire (33), la portion hémisphérique (34) présentant une surface externe convexe et une surface interne opposée concave, la première couche d'électrode (37) recouvrant au moins la majeure partie de la surface externe convexe.

10. Un appareil selon la revendication 9, dans lequel lesdites bandes parallèles opposées (106) s'étendent d'une extrémité restante ouverte (32) de la portion tubulaire (33) de l'électrolyte (31) à la portion hémisphérique (34) de l'électrolyte et ladite première couche d'électrode (37) recouvre la totalité de la surface externe convexe.

11. Un appareil selon la revendication 9, dans lequel lesdites bandes parallèles opposées (106) d'électrolyte découvert partent du voisinage de l'extrémité restante ouverte (32) de la portion tubulaire (33) de l'électrolyte (31) et divisent ladite première couche d'électrode (37) en deux portions, les deux portions de couche partant du voisinage de l'extrémité restant ouverte (32) de la portion tubulaire (33) de l'électrolyte (31) et s'unissant près de la portion hémisphérique (34) de l'électrolyte pour former la première couche d'électrode, et ladite première couche d'électrode présente une résistance totale maximum d'environ un demi-ohm ou moins à la température ambiante.

12. Un appareil selon la revendication 10, comprenant en outre une deuxième couche d'électrode (36) située en contact avec ladite surface interne tubulaire de l'électrolyte (31) au droit de ladite première couche d'électrode (37) et s'étendant le long d'au moins une partie de la longueur de la portion tubulaire (33) découverte par les deux bandes opposées (106), la deuxième couche d'électrode (36) formant l'autre électrode de la paire d'électrodes.

13. Un appareil selon la revendication 12, dans lequel les deux couches d'électrode (36, 37) sont formées chacune d'un matériau renfermant une majeure proportion pondérale de platine et sont poreuses pour l'oxygène gazeux, et ledit électrolyte solide (31) est formé d'un matériau renfermant une majeure proportion pondérale de zircone.

14. Un appareil selon l'une quelconque des revendications précédentes, comprenant en outre des moyens capteurs de température (39). propre à fournir un signal de température lié à la température de la cellule électrochimique, et des moyens de réglage (42) réagissant au signal de température pour régler la puissance du courant alternatif fourni par ledit moyen formant source de courant (66, 56) à ladite cellule (30).

_Fig.1_

EP 0 117 692 B1

Fig. 2

Fig. 2a

Fig. 3

Fig. 4

Fig. 5

Fig. 6

Fig. 7

_**Fig. 8**_

_**Fig. 9**_